# EUROPEAN PATENT SPECIFICATION

(11) **EP 1 271 849 B1**
(45) Date of publication and mention of the grant of the patent: **14.04.2004**
(21) Application number: 01440168.1
(22) Date of filing: 14.06.2001
(51) Int. Cl.: H04L 12/28, H04L 29/06

(54) **Terminal, access server system, method and computer program product allowing at least one user to contact at least one service system.**
Terminal, Netzwerkzugangsserversystem,Verfahren und Computerprogrammprodukt welches zumindest einem Benützer erlaubt wenigstens ein Dienstesystem zu kontaktieren
Terminal, serveur d'accès au système, procédé et produit logiciel permettant au moins à un utilisateur de contacter au moins un système de service

(43) Date of publication of application: 02.01.2003
(73) Proprietor: ALCATEL, 75008 Paris (FR)
(72) Inventor: Batsleer, Claudine, 9860 Scheldewindeke (BE); Daenen, Koen, 3150 Haacht (BE); Handekyn, Koen, 9000 Gent (BE); Trappeniers, Lieven, 3000 Leuven (BE); Chantrain, Dominique, 2650 Edegem (BE); Focant, Stéphane, 1030 Schaerbeek (BE); Marly, Nick, 9000 Gent (BE)
(74) Representative: Rausch, Gabriele, Dr.

(56) References cited:
- US-A- 5 864 542
- US-A- 6 119 160
- US-B1- 6 212 561
- CUCOS ET AL: "Home gateway architecture for generic multimedia services" CONSUMER ELECTRONICS, 1999. ICCE. INTERNATIONAL CONFERENCE ON LOS ANGELES, CA, USA 22-24 JUNE 1999, PISCATAWAY, NJ, USA,IEEE, US, 22 June 1999 (1999-06-22), pages 284-285, XP010346584 ISBN: 0-7803-5123-1

## Description

The invention relates to a terminal to be coupled to a network for allowing at least one user to contact at least one service system via an access server system, which access server system comprises stored service system codes each defining a service system and allowing access to this service system and comprises stored user profiles each being related to at least one service system code.

Such method and apparatus for providing the owners of domain sites on a computer network or the owners of private remotely accessible networks is known from US Patent No. 6,212,561. A method and apparatus for providing computer network access points the capability for multiple-level accounting is known from US Patent No. 6,119,160. An network access system is known from US 6,151,629, which discloses in its figure 1 prior art parts like an access server system (150, 160) coupled to a service system (170) for allowing a user to contact the service system via the user's access client (120 and/or 140), with the access server system comprising stored user profiles (161, 163). US 6,151,629 discloses in its column 1 lines 1-35 the prior art situation of the access server system comprising stored service system codes (line 34: "the IP-addresses are known beforehand").

The user's terminal is either a pc, a local computer, a workstation etc. or corresponds with an interface or coupler or intermediate unit (like a modem(pool), a residential gateway, a Local Area Network or LAN etc.) to be coupled between terminal and network, with said network comprising the access server system (like a Network Access Server or NAS coupled to a Service Selection Gateway or SSG etc.) and the service system (like an Internet Service Provider or ISP etc.).

The known terminal is disadvantageous, inter alia, due to being efficient insufficiently. Each access to a server system starts with the user via his terminal and via the NAS contacting the SSG, the SSG responding via the NAS to the terminal, the user via his terminal informing the SSG via the NAS of his selection etc. This is a roundabout way.

The terminal according to the invention is characterised in that said terminal comprises a memory for in response to a download signal storing downloaded service system codes.

By, in response to the download signal, downloading service system codes from the access server system to the terminal and storing these downloaded service system codes in the terminal's memory, the user now has these service system codes available in his terminal, which allows a much higher efficiency.

The invention is based on the insight, inter alia, that firstly the shortest route between two points is a straight line, and secondly that said straight line is shortest when both points are located close to one another.

The invention solves the problem, inter alia, of increasing the efficiency of a terminal communicating with a service system via an access server system.

US 6,151,629 is related to a remote computer requiring Internet access via his home LAN. Therefore, this US patent discloses the access server system comprising stored service system codes each defining a service system and allowing access to this service system and comprising stored user profiles each being related to at least one service system code. However, this allows the remote computer to access the Internet via the home LAN, which remote computer does not correspond with the terminals, interfaces, couplers and/or intermediate units coupled to and/or forming part of the LAN. Further, US 6,151,629 does not disclose said downloading and storing of service system codes in said (home) terminal.

A first embodiment of the terminal according to the invention is characterised in that said terminal comprises a generator for generating an access signal comprising a user profile code and defining said user wishing to access at least one service system via said access server system, which terminal further comprises a detector for detecting said download signal which has been generated in said access server system in response to said access signal, with said user accessing a service system by selecting a downloaded service system code and sending it to the access server system.

With the terminal comprising said generator for generating an access signal comprising a user profile code and defining said user wishing to access at least one service system via said access server system, with said access server system comprising a detector for detecting said access signal, with said access server system comprising a generator for generating the download signal in response to said access signal, with the terminal further comprising said detector for detecting said download signal, said user can now access a service system by selecting a downloaded service system code and informing the access server system. In this case the storing of downloaded service system codes may be temporarily, for example for a predefined time interval or until the end of a session.

A second embodiment of the terminal according to the invention is characterised in that said terminal comprises a synchronizer for generating a sync signal for synchronizing service system codes stored in the access server system and downloaded service system codes stored in the memory.

With the terminal comprizing said synchronizer, in response to said sync signal both said service system codes stored in the access server system and downloaded service system codes stored in the memory can be synchronized, thereby allowing a storage of downloaded service system codes in the memory for a longer period.

A third embodiment of the terminal according to the invention is characterised in that said downloaded service system codes are stored in said memory in relation to user profiles.

With the downloaded service system codes being stored in said memory in relation to user profiles, several users can now use the same terminal, with each user having his own preferences and/or possibilities, in dependence of user identification codes and/or user authorization codes and/or user authentication codes, whereby pin codes, passwords, voice - picture - pupil - fingerprint - recognition, smard cards, RF tags etc will be used.

The invention further relates to an access server system for allowing at least one user via a terminal to contact at least one service system via said access server system, which access server system comprises a server for storing service system codes each defining a service system and allowing access to this service system and for storing user profiles each being related to at least one service system code.

The access server system according to the invention is characterised in that the access server system comprises a generator for generating a download signal, with said terminal in response to said download signal storing downloaded service system codes.

A first embodiment of the access server system according to the invention is characterised in that said access server system comprises a detector for detecting an access signal comprising a user profile and defining said user wishing to access at least one service system via said access server system, which generator is coupled to said detector for in response to said detecting generating said download signal, with said terminal generating said access signal, with said user accessing a service system by selecting a downloaded service system code and informing the access server system.

A second embodiment of the access server system according to the invention is characterised in that said access server system comprises a synchronizer for generating a sync signal for synchronizing service system codes stored in the server and downloaded service system codes stored in the terminal.

A third embodiment of the access server system according to the invention is characterised in that said downloaded service system codes are downloaded per user profile.

The invention yet further relates to a method for allowing at least one user via a terminal to contact at least one service system via an access server system, which access server system comprises a server for storing service system codes each defining a service system and allowing access to this service system and for storing user profiles each being related to at least one service system code.

The method according to the invention is characterised in that said method comprises the steps of generating a download signal in said access server system, of sending said download signal from said access server system to said terminal, and of storing downloaded service system codes in said terminal in response to said download signal.

The invention also relates to a computer program product for allowing at least one user via a terminal to contact at least one service system via an access server system, in which access server system service system codes each defining a service system and allowing access to this service system and user profiles each being related to at least one service system code have been stored.

The computer program product is characterised in that said computer program product comprises a storage function for in response to a download signal downloading and storing service system codes from said access server system into said terminal.

US 6,151,629 discloses a triggered remote dial up for Internet access. US 5,761,662 discloses a personalized information retrieval using a user defined profile.

The invention will be further explained more detailledly at the hand of drawings, whereby
figure 1 discloses a terminal according to the invention coupled to an accesses server system according to the invention, and
figure 2 discloses a flow chart illustrating a method according to the invention and a computer program product according to the invention.

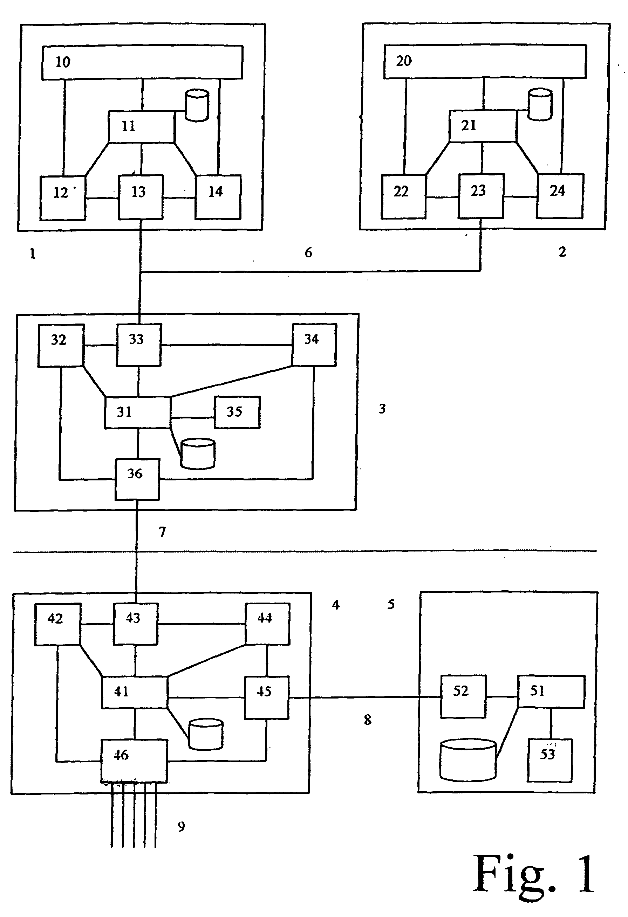

Figure 1 discloses a terminal 1, a terminal 2 and a Residential Gateway (RG) 3 which are mutually coupled via a bus 6. RG 3 is further coupled via a connection 7 to an access server system 4 + 5 consisting of a Network Access Server (NAS) 4 and a Service Selection Gateway (SSG) 5 which are mutually coupled via a connection 8. NAS 4 is further coupled to several service systems not shown via connections 9.

Terminal 1 comprises a man machine interface (mmi) 10 of which an output is coupled to an input of a sender 12. An output of sender 12 is coupled to an input of interface 13, of which an output is coupled to an input of a receiver 14. An output of receiver 14 is coupled to an input of mmi 10. A processor + memory 11 is coupled via control connections to mmi 10, to sender 12, to interface 13 and to receiver 14. An in/output of interface 13 is coupled to bus 6.

Terminal 2 comprises a man machine interface (mmi) 20 of which an output is coupled to an input of a sender 22. An output of sender 22 is coupled to an input of interface 23, of which an output is coupled to an input of a receiver 24. An output of receiver 24 is coupled to an input of mmi 20. A processor + memory 21 is coupled via control connections to mmi 20, to sender 22, to interface 23 and to receiver 24. An in/output of interface 23 is coupled to bus 6.

RG 3 comprises a first interface 33 of which a first in/output is coupled to bus 6 and of which a second in/output is coupled to a first in/output of a generator 32 and of which a third in/output is coupled to an first in/output of a detector 34. A second in/output of generator 32 is coupled to a first in/output of a second interface 36, of which a second in/output is coupled to a second in/output of detector 34. A processor + memory 31 is coupled via control connections to both interfaces 33 and 36, to generator 32, to detector 34 and to a synchronizer 35. A third in/output of second interface 36 is coupled to connection 7.

NAS 4 comprises a first interface 43 of which a first in/output is coupled to connection 7 and of which a second in/output is coupled to a first in/output of a detector 42 and of which a third in/output is coupled to a first in/output of a generator 44. A second in/output of detector 42 is coupled to a first in/output of a second interface 46, of which a second in/output is coupled to a first in/output of a third interface 45, of which a second in/output is coupled to a second in/output of generator 44. A processor + memory 41 is coupled via control connections to said interfaces 43 and 46 and 45, to detector 42 and to generator 44. A third in/output of second interface 46 is coupled to connections 9, and a third in/output of third interface 45 is coupled to connection 8.

SSG 5 comprises an interface 52 of which an in/output is coupled to connection 8. A processor + server 51 is coupled via control connections to said interface 52 and to a synchronizer 53.

The terminal according to the invention and the access server system according to the invention function as follows.

According to a first embodiment, a user sitting behind terminal 1 decides to go surfing the web. Via mmi 10 (comprising a mouse, a keyboard, a display, a microphone, loudspeakers etc.), said user generates a start signal (for example comprising a service request code), which is for example supplemented with a user identification code stored in memory 11 and which under control of processor 11 via sender 12 and interface 13 and bus 6 is sent to interface 33 in RG 3. Via interface 33 said start signal is supplied to detector 34 and to generator 32 under control of processor 31. Detector 34 detects said start signal (thereby for example detecting the service request code), and informs processor 31, which in response consults memory 31 to check whether downloaded service system codes are already present or not.

If already present, said downloaded service system codes are sent to mmi 10 in terminal 1 via interface 33 and bus 6 and interface 13 and receiver 14, and presented to the user, who then can make a selection. Said user gets access via the selected service system code to a selected service via bus 6, RG 3, NAS 4 and one of one of said connections 9.

If downloaded service system codes are not yet present in memory 35, at the hand of the identification code, memory 31 generates a user profile code, which is supplied to processor 31. Processor 31 sends said user profile code to generator 32, which generates an access signal based upon said start signal (for example comprising a service request code) and being supplemented with the user profile code. This access signal is sent via interface 36 and connection 7 to interface 43 in NAS 4.

Via interface 43 said access signal is supplied to detector 42 and to generator 44 under control of processor 41. Detector 42 detects said access signal (thereby for example detecting the service request code and/or the user profile code), and informs processor 41, which in response controls generator 44 in such a way that an order signal is generated (for example comprising the service request code and/or the user profile code), which order signal is sent via interface 45 and connection 4 and interface 52 to processor 51 in SSG 5. Processor 51 (comprising a detector not shown) detects this order signal and in response collects service system codes stored in server 51 in relation to said user profile code. These service system codes are sent to NAS 4 via processor 51, interface 52, connection 8 and interface 45, and for example temporarily stored in memory 41. Processor 41 is informed and in response controls generator 44 in such a way that a download signal (for example comprising the service request code (for administrative purposes) and/or the user profile code) is generated and sent via interface 43 and connection 7 to RG 3.

Via interface 36 said download signal is sent to detector 34, which detects this download signal and informs processor 31. Possibly after a further communication between processor 31 and processor 41, like for example a ready signal, but not necessarily, like for example within a predetermined time interval, said service system codes temporaily stored in memory 41 are downloaded to RG 3 and stored into memory 31, in relation to the user profile code and/or user identification code.

Then, said downloaded service system codes are sent to mmi 10 in terminal 1 via interface 33 and bus 6 and interface 13 and receiver 14, and presented to the user, who makes a selection. Said user gets access via the selected service system code to a selected service via bus 6, RG 3, NAS 4 and one of one of said connections 9.

Generally according to this first embodiment the storing of downloaded service system codes could be temporarily, for example for a predefined time interval or until the end of a session.

According to a first alternative to said first embodiment, the download signal and the downloaded service system codes are combined and sent as one signal from NAS 4 to RG 3.

According to a second alternative to said first embodiment, NAS 4 and SSG 5 are integrated, with at least interfaces 45 and 52 being combined into one interface. Further, possibly processors 41 and 51 could be combined, memory 41 and server 51 could be combined, etc.

According to a third alternative to said first embodiment, terminal 1 and RG 3 are integrated, with at least interfaces 13 and 33 being combined. Further, possibly processors 11 and 31 could be combined, memories 11 and 31 could be combined, etc.

According to a fourth alternative to said first embodiment, a first user is sitting behind terminal 1, and a second user is sitting behind terminal 2, both deciding to access certain service systems, with both being treated separately due to both using different user identification codes and/or different user profile codes. Possibly, a priority and/or authorization is introduced in relation to said codes, whereby a decider located at least either in each terminal or in RG 3 or in NAS 4 or in SSG 5 is used for deciding about priority and/or authorization. Of course, pin codes, passwords, voice - picture - pupil - fingerprint - recognition, smard cards, RF tags etc could be used.

According to a second embodiment, the storing of downloaded service system codes is done for a longer period and generally does not have a temporary character.

Then old downloaded service system codes are already present in memory 31, but need to be synchronized with the new service system codes stored in server 51. For example once per predefined time interval synchronizer 35 generates a sync signal (for example per user profile and comprising this user profile code), which is supplied to processor 31. Processor 31 sends said sync signal via interface 36 and connection 7 to interface 43 in NAS 4.

Via interface 43 said sync signal is supplied to detector 42 and to generator 44 under control of processor 41. Detector 42 detects said sync signal (thereby for example detecting the user profile code), and informs processor 41, which in response controls generator 44 in such a way that an order signal is generated (for example comprising the user profile code), which order signal is sent via interface 45 and connection 4 and interface 52 to processor 51 in SSG 5. Processor 51 (comprising a detector not shown) detects this order signal and in response collects new service system codes stored in server 51 in relation to said user profile code. These new service system codes are sent to NAS 4 via processor 51, interface 52, connection 8 and interface 45, and for example temporarily stored in memory 41. Processor 41 is informed and in response controls generator 44 in such a way that a download signal (for example comprising the user profile code) is generated and sent via interface 43 and connection 7 to RG 3.

Via interface 36 said download signal is sent to detector 34, which detects this download signal and informs processor 31. Possibly after a further communication between processor 31 and processor 41, like for example a ready signal, but not necessarily, like for example within a predetermined time interval, said new service system codes temporaily stored in memory 41 are downloaded to RG 3 and stored into memory 31, in relation to the user profile code and/or user identification code.

Then, said new downloaded service system codes are used for updating the old downloaded service system codes, for example via processor 31 comprising a comparator not shown and/or via synchronizer 35, and as a result updates can be taken into account.

According to a first alternative to said second embodiment, the download signal and the new downloaded service system codes are combined and sent as one signal from NAS 4 to RG 3.

According to a second alternative to said second embodiment, NAS 4 and SSG 5 are integrated, with at least interfaces 45 and 52 being combined into one interface. Further, possibly processors 41 and 51 could be combined, memory 41 and server 51 could be combined, etc.

According to a third alternative to said second embodiment, terminal 1 and RG 3 are integrated, with at least interfaces 13 and 33 being combined. Further, possibly processors 11 and 31 could be combined, memories 11 and 31 could be combined, etc.

According to a fourth alternative to said second embodiment, in response to synchronizer 35 generating a sync signal, the old downloaded service,system codes stored in memory 31 are uploaded into server 51 for updating purposes, with either processor 51 comprising a comparator not shown and/or via synchronizer 53, updates are taken into account, after which the updated and uploaded service system codes must be downloaded.

According to a fifth alternative to said second embodiment, synchronizer 53 generates a sync signal, in response to which a download signal is sent to RG 3 and/or new service system codes (possibly temporarily stored in memory 41) are downloaded to RG 3 and stored into memory 31, in relation to the user profile code and/or user identification code, and said new downloaded service system codes are used for updating the old downloaded service system codes, for example via processor 31 comprising a comparator not shown and/or via synchronizer 35, and as a result updates can be taken into account.

According to a sixth alternative to said second embodiment, in response to synchronizer 53 generating a sync signal, the old downloaded service system codes stored in memory 31 are uploaded into server 51 for updating purposes, with either processor 51 comprising a comparator not shown and/or via synchronizer 53, updates are taken into account, after which the updated and uploaded service system codes must be downloaded.

Each embodiment and/or each alternative can be combined with each other embodiment and/or each other alternative. An in/output corresponds with an input, an output and/or an input + output. Each part of terminal 1,2, of RG 3, of NAS 4 and/or of SSG 5, shown in the form of a block or not shown, can be 100% hardware, 100% software or a mixture of both. Therefore, a generator also comprises a generating function, a detector also comprises a detecting function, and a synchronizer also comprises a synchronization function. Each block shown or not shown can be integrated with each other block shown and/or not shown per terminal, per RG, per NAS and per SSG, but also per combinations of at least two of these terminal, RG, NAS and SSG. In addition to each memory/server shown, per terminal, per RG, per NAS and per SSG, each block can have a further memory not shown for efficiency purposes.

The bus 6 between terminals 1 and 2 and RG 3, the connection 7 between RG and NAS 4, and the connection betweeen NAS 4 and SSG 5, are just examples, and can be replaced by one or more other wired (electrical or optical) connections, wireless (radio) connections etc, in a circuit-switched or packet-switched way, possibly in the form of an always-on connection.

The terminal according to the invention could be an RG as shown in figure 1, but could also be a modem(pool), a LAN etc, and could be integrated with one of said terminals.

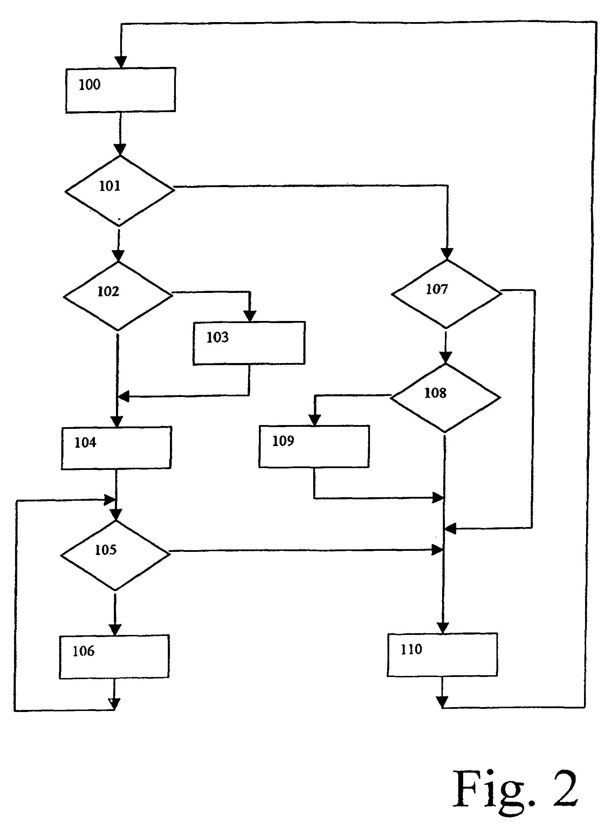

In the flow chart shown in figure 2 the blocks have the following meaning:
Block 100: Start, goto 101;
Block 101: Detection of access signal? If yes, goto 102, if no, goto 107;
Block 102: Service system codes downloaded? If yes, goto 104, if no, goto 103;
Block 103: Download + store service system codes, goto 104;
Block 104: Present service system codes to user, goto 105;
Block 105: Detection of selection? If yes, goto 106, if no, goto 110;
Block 106: Access to selected service, goto 105;
Block 107: Detection of sync signal? If yes, goto 108, if no, goto 110;
Block 108: Sufficient equality? If yes, goto 110, if no, goto 109;
Block 109: Update the service system codes, goto 110;
Block 110: Wait for elapse of predefined time interval, goto 100.

The method according to the invention and the computer program product according to the invention function as follows. At a certain moment in time, the method is started (Block 100, goto 101); Is there a detection of an access signal, indicating that a user want to access a service (Block 101, if yes, goto 102, if no, goto 107); If yes, are the service system codes downloaded (Block 102, if yes, goto 104, if no, goto 103); If not downloaded, these codes must be downloaded and stored (Block 103, goto 104); If downloaded, these codes are to be presented to said user (Block 104, goto 105); Is there a detection of a user's selection within a predefined time interval (Block 105, if yes, goto 106, if no, goto 110); If yes, said user gets access (Block 106, goto 105); And wait for another detection of a user's selection (Block 105, if yes, goto 106, if no, goto 110); If no detection of a user's selection within said predefined time interval or if no detection of an access signal, is there a detection of a sync signal indicating that synchronization is to be checked (Block 107, if yes, goto 108, if no, goto 110); If yes, is there sufficient equality (Block 108, if yes, goto 110, if no, goto 109); If no, update (Block 109, goto 110); If sufficient equality or if no detection of a sync signal, wait for elapse of a further predefined time interval (Block 110, goto 100), then back to start, etc.

## Claims

1. Terminal (1, 2, 3) to be coupled to a network for allowing at least one user to contact at least one service system via an access server system (4, 5) which access server system comprises stored service system codes each defining a service system and allowing access to this service system and comprises stored user profiles each being related to at least one service system code, **characterised in that** said terminal comprises a memory for in response to a download signal storing downloaded service system codes.

2. Terminal (1, 2, 3) according to claim 1, **characterised in that** said terminal comprises a generator for generating an access signal comprising a user profile code and defining said user wishing to access at least one service system via said access server system, which terminal further comprises a detector for detecting said download signal which has been generated in said access server system in response to said access signal, with said user accessing a service system by selecting a downloaded service system code and sending it to the access server system.

3. Terminel (1, 2, 3) according to claim 1 or 2, **characterised in that** said terminal comprises a synchronizer for generating a sync signal for synchronizing service system codes stored in the access server system and downloaded service system codes stored in the memory.

4. Terminal (1, 2, 3) according to claim 1, 2 or 3, **characterised in that** said downloaded service system codes are stored in said memory in relation to user profiles.

5. Access server system (4, 5) for allowing at least one user via a terminal (1, 2, 3) to contact at least one service system via said access server system (4, 5), which access server system comprises a server for storing service system codes each defining a service system and allowing access to this service system and for storing user profiles each being related to at least one service system code, **characterised in that** the access server system comprises a generator for generating a download signal, with said terminal in response to said download signal storing downloaded service system codes.

6. Access server system (4, 5) according to claim 5, **characterised in that** said access server system comprises a detector for detecting an access signal comprising a user profile and defining said user wishing to access at least one service system via said access server system, which generator is coupled to said detector for in response to said detecting generating said download signal, with said terminal (1, 2, 3) generating said access signal, with said user accessing a service system by selecting a downloaded service system code and sending it to the access server system.

7. Acces server system (4, 5) according to claim 5 or 6, **characterised in that** said access server system comprises a synchronizer for generating a sync signal for synchronizing service system codes stored in the server and downloaded service system codes stored in the terminal (1, 2, 3).

8. Access server system (4, 5) according to claim 5, 6 or 7, **characterised in that** said downloaded service system codes are downloaded per user profile.

9. Method for allowing at least one user via a terminal (1, 2, 3) to contact at least one service system via an access server system (4, 5), which access server system comprises a server for storing service system codes each defining a service system and allowing access to this service system and for storing user profiles each being related to at least one service system code, **characterised in that** said method comprises the steps of generating a download signal in said access server system, of sending said download signal from said access server system to said terminal, and of storing downloaded service system codes in said terminal in response to said download signal.

10. Computer program product for allowing at least one user via a terminal (1, 2, 3) to contact at least one service system via an access server system (4, 5), in which access server system service system codes each defining a service system and allowing access to this service system and user profiles each being related to at least one service system code have been stored, **characterised in that** said computer program product comprises a storage function for in response to a download signal downloading and storing service system codes from said access server system into said terminal.

## Patentansprüche

1. Endeinrichtung (1, 2, 3) zum Anschluss an ein Netz, um es mindestens einem Benutzer zu ermöglichen, über ein Zugangsserversystem (4, 5) mit mindestens einem Dienstsystem Kontakt aufzunehmen, welches Zugangsserversystem gespeicherte Dienstsystemcodes, die jeweils ein Dienstsystem definieren und Zugang zu diesem Dienstsystem ermöglichen, und jeweils mit mindestens einem Dienstsystemcode in Beziehung stehende Benutzerprofile enthält, **dadurch gekennzeichnet dass** die Endeinrichtung einen Speicher zum Speichern von heruntergeladenen Dienstsystemcodes aufgrund eines Download-Signals enthält.

2. Endeinrichtung (1, 2, 3) nach Anspruch 1, **dadurch gekennzeichnet dass** sie einen Generator zum Erzeugen eines Zugriffssignals, das einen Benutzerprofilscode umfasst und den Benutzer definiert, der über das Zugangsserversystem auf mindestens ein Dienstsystem zugreifen möchte, und einen Detektor zum Erkennen des in dem Zugangsserversystem aufgrund des Zugriffssignals erzeugten Download-Signals enthält, wobei der Benutzer auf das Dienstsystem zugreift, indem er einen heruntergeladenen Dienstsystemcode auswählt und an das Zugangsserversystem sendet.

3. Endeinrichtung (1, 2, 3) nach Anspruch 1 oder 2, **dadurch gekennzeichnet dass** sie eine Synchronisiereinrichtung zum Erzeugen eines Synchronisiersignals zum Synchronisieren von in dem Zugangsserversystem gespeicherten Dienstsystemcodes und von heruntergeladenen, in dem Speicher gespeicherten Dienstsystemcodes enthält.

4. Endeinrichtung (1, 2, 3) nach Anspruch 1, 2 oder 3, **dadurch gekennzeichnet dass** die heruntergeladenen Dienstsystemcodes in dem Speicher in Relation zu Benutzerprofilen gespeichert sind.

5. Zugangsserversystem (4, 5), das es mindestens einem Benutzer ermöglicht, über eine Endeinrichtung (1, 2, 3) und das Zugangsserversystem (4, 5) mit mindestens einer Diensteinrichtung Kontakt aufzunehmen, welches Zugangsserversystem einen Server zum Speichern von Dienstsystemcodes, die jeweils ein Dienstsystem definieren und Zugang zu diesem Dienstsystem ermöglichen, und zum Speichern von Benutzerprofilen enthält, die jeweils mit mindestens einem Dienstsystemcode in Beziehung stehen, **dadurch gekennzeichnet, dass** das Zugangsserversystem einen Generator zum Erzeugen eines Download-Signals enthält, wobei die Endeinrichtung heruntergeladene Dienstsystemcodes aufgrund des Download-Signals speichert.

6. Zugangsserversystem (4, 5) nach Anspruch 5, **dadurch Gekennzeichnet, dass** es einen Detektor zum Erkennen eines Zugriffssignals enthält, welches ein Benutzerprofil umfasst und den Benutzer definiert, der über das Zugangsserversystem auf mindestens ein Dienstsystem zugreifen möchte, und dass der Generator mit dem Detektor verbunden ist, um aufgrund der Erkennung das Download-Signal zu erzeugen, wobei die Endeinrichtung (1, 2, 3) das Zugriffssignal erzeugt und wobei der Benutzer auf das Dienstsystem zugreift, indem er einen heruntergeladenen Dienstsystemcode auswählt und zum Zugangsserversystem sendet.

7. Zugangsserversystem (4, 5) nach Anspruch 5 oder 6, **dadurch gekennzeichnet, dass** es eine Synchronisiereinrichtung zum Erzeugen eines Synchronisiersignals zum Synchronisieren von in dem Server gespeicherten Dienstsystemcodes und von heruntergeladenen, in der Endeinrichtung (1, 2, 3) gespeicherten Dienstsystemcodes enthält.

8. Zugangsserversystem (4, 5) nach Anspruch 5, 6 oder 7, **dadurch gekennzeichnet, dass** die heruntergeladenen Dienstsystemcodes pro Benutzerprofil heruntergeladen werden.

9. Verfahren, das es mindestens einem Benutzer ermöglicht, über eine Endeinrichtung und ein Zugangsserversystem mit mindestens einem Dienstsystem Kontakt aufzunehmen, welches Zugangsserversystem einen Server zum Speichern von Dienstsystemcodes, die jeweils ein Dienstsystem definieren und Zugang zu diesem Dienstsystem ermöglichen, und zum Speichern von Benutzerprofilen enthält, die jeweils mit mindestens einem Dienstsystemcode in Beziehung stehen, **dadurch gekennzeichnet, dass** das Verfahren folgende Schritte umfasst: Erzeugen eines Download-Signals in dem Zugangsserversystem; Senden des Download-Signals von dem Zugangsserversystem zu der Endeinrichtung; und Speichern des heruntergeladenen Dienstsystemcodes in der Endeinrichtung aufgrund des Download-Signals.

10. Rechnerprogramm-Produkt, das es mindestens einem Benutzer ermöglicht, über eine Endeinrichtung (1, 2, 3) und ein Zugangsserversystem (4, 5), in dem Dienstsystemcodes, die jeweils ein Dienstsystem definieren und Zugang zu diesem Dienstsystem ermöglichen, und jeweils mit mindestens einem Dienstsystemcode in Beziehung stehende Benutzerprofile gespeichert sind, mit mindestens einem Dienstsystem Kontakt aufzunehmen, **dadurch gekennzeichnet, dass** das Rechnerprogramm-Produkt eine Speicherfunktion zum Herunterladen von Dienstsystemcodes vom Zugangsserversystem zur Endeinrichtung aufgrund eines Download-Signals und zum Speichern dieser Dienstsystemcodes in der Endeinrichtung enthält.

## Revendications

1. Terminal (1, 2, 3) devant être couplé à un réseau pour permettre au moins à un utilisateur de contacter au moins un système de service via un serveur d'accès au système (4, 5), ledit serveur d'accès au système comprenant des codes de système de service stockés, chacun définissant un système de service et permettant l'accès à ce système de service, et comprenant des profils d'utilisateur stockés, chacun étant associé à au moins un code de système de service, **caractérisé en ce que** ledit terminal comprend une mémoire pour, en réponse à un signal de téléchargement, stocker des codes de système de service téléchargés.

2. Terminal (1, 2, 3) selon la revendication 1, **caractérisé en ce que** ledit terminal comprend un générateur pour générer un signal d'accès comprenant un code de profil d'utilisateur et définissant ledit utilisateur souhaitant accéder à au moins un système de service via ledit serveur d'accès au système, ledit terminal comprenant en outre un détecteur pour détecter ledit signal de téléchargement qui a été généré dans ledit serveur d'accès au système en réponse audit signal d'accès, ledit utilisateur accédant à un système de service en sélectionnant un code de système de service téléchargé et en l'envoyant au serveur d'accès au système.

3. Terminal (1, 2, 3) selon la revendication 1 ou 2, **caractérisé en ce que** ledit terminal comprend un synchroniseur pour générer un signal de synchronisation pour synchroniser les codes de système de service stockés dans le serveur d'accès au système et les codes de système de service téléchargés stockés dans la mémoire.

4. Terminal (1, 2, 3) selon la revendication 1, 2 ou 3, **caractérisé en ce que** lesdits codes de système de service téléchargés sont stockés dans ladite mémoire en rapport avec des profils d'utilisateur.

5. Serveur d'accès au système (4, 5) pour permettre au moins à un utilisateur via un terminal (1, 2, 3) de contacter au moins un système de service via ledit serveur d'accès au système (4, 5), ledit serveur d'accès au système comprenant un serveur pour stocker les codes de système de service, chacun définissant un système de service et permettant l'accès à ce système de service, et pour stocker les profils d'utilisateur, chacun étant associé à au moins un code de système de service, **caractérisé en ce que** le serveur d'accès au système comprend un générateur pour générer un signal de téléchargement, ledit terminal en réponse audit signal de téléchargement stockant les codes de système de service téléchargés.

6. Serveur d'accès au système (4, 5) selon la revendication 5, **caractérisé en ce que** ledit serveur d'accès au système comprend un détecteur pour détecter un signal d'accès comprenant un profil d'utilisateur et définissant ledit utilisateur souhaitant accéder à au moins un système de service via ledit serveur d'accès au système, ledit générateur étant couplé audit détecteur pour, en réponse à ladite détection, générer ledit signal de téléchargement, ledit terminal (1, 2, 3) générant ledit signal d'accès, ledit utilisateur accédant à un système de service en sélectionnant un code de système de service téléchargé et en l'envoyant au serveur d'accès au système.

7. Serveur d'accès au système (4, 5) selon la revendication 5 ou 6, **caractérisé en ce que** ledit serveur d'accès au système comprend un synchroniseur pour générer un signal de synchronisation pour synchroniser les codes de système de service stockés dans le serveur et les codes de système de service téléchargés stockés dans le terminal (1, 2, 3).

8. Serveur d'accès au système (4, 5) selon la revendication 5, 6 ou 7, **caractérisé en ce que** lesdits codes de système de service téléchargés sont téléchargés par profil d'utilisateur.

9. Procédé pour permettre au moins à un utilisateur via un terminal (1, 2, 3) de contacter au moins un système de service via un serveur d'accès au système (4, 5), ledit serveur d'accès au système comprenant un serveur pour stocker les codes de système de service, chacun définissant un système de service et permettant l'accès à ce système de service, et pour stocker les profils d'utilisateur, chacun étant associé à au moins un code de système de service, **caractérisé en ce que** ledit procédé comprend les étapes consistant à générer un signal de téléchargement dans ledit serveur d'accès au système, à envoyer ledit signal de téléchargement dudit serveur d'accès au système audit terminal, et à stocker lesdits codes de système de service téléchargés dans ledit terminal en réponse audit signal de téléchargement.

10. Produit logiciel pour permettre au moins à un utilisateur via un terminal (1, 2, 3) de contacter au moins un système de service via un serveur d'accès au système (4, 5), dans ledit serveur d'accès au système des codes de système de service, chacun définissant un système de service et permettant l'accès à ce système de service, et des profils d'utilisateur, chacun étant associé à au moins un code de système de service ont été stockés, **caractérisé en ce que** ledit produit logiciel comprend une fonction de stockage pour, en réponse à un signal de téléchargement, télécharger et stocker des codes de système de service dudit serveur d'accès au système dans ledit terminal.
